# EUROPÄISCHE PATENTANMELDUNG

(11) **EP 4 494 471 A1**
(43) Veröffentlichungstag der Anmeldung: **22.01.2025**
(21) Anmeldenummer: 23186001.6
(22) Anmeldetag: 18.07.2023
(51) Int. Cl.: A23C 9/18, A23L 33/00, A23P 10/00, A23P 10/28, A23P 20/10, A23P 20/20, A23P 30/00, A23P 30/10, B65D 65/46

(54) **NAHRUNGSMITTELZUBEREITUNG, INSBESONDERE MILCHPULVER IN TABLETTENFORM, IN EINER WASSERLÖSLICHEN UMHÜLLUNG**

(71) Anmelder: DMK Deutsches Milchkontor GmbH, 27404 Zeven (DE)
(72) Erfinder: HILKER, Nils, 20146 Hamburg (DE)
(74) Vertreter: Fabry, Bernd

(57) **Zusammenfassung**

Vorgeschlagen wird eine Nahrungsmittelzubereitung in wasserlöslicher Darreichungsform, erhältlich oder erhalten durch die folgenden Schritte:
(a) Bereitstellen eines wasserlöslichen Nahrungsmittels und
(b) Einschließen des Nahrungsmittels aus Schritt (a) in einer wasserlöslichen Hülle.

## Beschreibung

### GEBIET DER ERFINDUNG

Die vorliegende Erfindung befindet sich auf dem Gebiet der Verpackung und betrifft eine verbesserte Darreichungsform für Nahrungsmittel, insbesondere für die Kleinkindernährung.

### TECHNOLOGISCHER HINTERGRUND

Derzeit werden Milchpulver für die Kleinkindernährung in sogenannten MyPacks oder Bag in Box (Bib) angeboten. Bei Mypack wird das Pulver direkt in einen Container abgefüllt und bei der Bib wird das Pulver in einen Beutel gefüllt, der wiederum in einen Container gestellt wird. Beider-Formate sind mit einem Deckel verschließbar.
Für jede Mahlzeit wird eine entsprechende Menge Pulver entnommen und die Verpackung wieder verschlossen. Durch das wiederholte Öffnen und Schließen der Verpackung kann es zu Kontaminationen kommen. Zudem ist das Portionieren aufwendig.

### STAND DER TECHNIK

WO 2019 216697 A1 (NOHBO) bezieht sich auf ein Hygieneprodukt, eine Hygieneprodukthülse und ein Verfahren zur Verwendung der Hygieneprodukthülse, wobei die Hygieneprodukthülse eine wasserlösliche Umhüllung enthält und das Hygieneprodukt in der Umhüllung versiegelt ist. Das Hygieneprodukt enthält einen Träger, der Butylenglykol in einer Menge von etwa 40 Gew.-% bis etwa 70 Gew.-%, bezogen auf das Gesamtgewicht des Hygieneprodukts, enthält, und einen Wirkstoff, der mindestens ein Tensid enthält.

WO 2019 238730 A1 (BASF) bezieht sich auf ein Verfahren zur Herstellung eines wasserlöslichen Behälters, das folgende Schritte umfasst
- Bilden eines offenen Beutels aus einer ersten wasserlöslichen Folie;
- Füllen mindestens eines Teils des Beutels mit einer Zusammensetzung;
- Abdecken des gefüllten Beutels mit einer zweiten wasserlöslichen Folie
- Versiegeln der ersten wasserlöslichen Folie des gefüllten Beutels mit der zweiten wasserlöslichen Folie,
wobei mindestens eine der ersten oder zweiten wasserlöslichen Folien eine mehrschichtige Folie ist, die mindestens zwei Folienschichten L1 und/oder L2 in beliebiger Reihenfolge oder eine wasch- und reinigungsaktive Polymerfolie umfasst, und wobei vor dem Versiegelungsschritt d) die zweite wasserlösliche Folie, die den gefüllten Beutel bedeckt, mit Wasser in Kontakt gebracht wird, einen wasserlöslichen Behälter, der durch das Verfahren erhältlich ist, die Verwendung des Verfahrens zur Herstellung einer Waschmittelkapsel oder Geschirrspülkapsel und die Verwendung des wasserlöslichen Behälters zur Dosierung von Waschmittel in eine Waschmaschine oder eine Geschirrspülmaschine.

WO 2021 092214 A1 (NOHBO) betrifft eine Hygieneproduktkapsel und ein Verfahren zur Verwendung der Hygieneproduktkapsel, wobei die Hygieneproduktkapsel eine wasserlösliche Umhüllung und das in der Umhüllung versiegelte Hygieneprodukt umfasst. Das Hygieneprodukt enthält Tenside in einer Menge von etwa 10 Gew.-% bis etwa 40 Gew.-%; Polyole in einer Menge von etwa 10 Gew.-% bis etwa 30 Gew.-%; Polyglycerylfettsäureester (PGEs) in einer Menge von etwa 10 Gew.-% bis etwa 50 Gew.-%. Prozent bis etwa 50 Gew.-Prozent; flüssige Amide in einer Menge von etwa 5 Gew.-Prozent bis etwa 40 Gew.-Prozent; und Phospholipide in einer Menge von 0 bis etwa 20 Gew.-Prozent, wobei das Hygieneprodukt einen Gehalt an freiem Wasser von etwa 9 Gew.-Prozent oder weniger aufweist.

WO 2023 023493 A1 (NOHBO) offenbart lagerstabile wasserlösliche Filme, die eine hydrophile Polymermischung enthalten, und Verfahren zu deren Herstellung. Ebenfalls offenbart werden hier Hygieneprodukthülsen, die eine wasserlösliche Hülle und ein darin eingekapseltes Hygieneprodukt umfassen.

### AUFGABE DER ERFINDUNG

Daher hat die Aufgabe der vorliegenden Erfindung darin bestanden, eine Verpackung insbesondere für Lebensmittel in Pulverform, speziell für Milchpulver, zur Verfügung zu stellen, die die Nachteile des Stands der Technik vermeidet. Insbesondere sollte die Verpackung eine einfache Dosierung ohne Gefahr einer Kontaminierung der Restmenge an Produkt sicherstellen.

### BESCHREIBUNG DER ERFINDUNG

Ein erster Gegenstand der Erfindung betrifft eine Nahrungsmittelzubereitung in wasserlöslicher Darreichungsform, erhältlich oder erhalten durch die folgenden Schritte:
(a) Bereitstellen eines wasserlöslichen Nahrungsmittels und
(b) Einschließen des Nahrungsmittels aus Schritt (a) in einer wasserlöslichen Hülle.

Bei den erfindungsgemäßen Darreichungsformen kann es sich insbesondere um wasserlösliche Pods (Kapseln) bzw. wasserlösliche Sachets (Säckchen) handeln, die die Nahrungsmittel in fester, flüssiger oder halbflüssiger, pastöser Form enthalten. Die beiden Begriffe "Pod" und "Sachet" werden dabei synonym verwendet. Als Sachets werden dabei besonders große Pods bezeichnet, wie sie beispielsweise Geschirrspültabs umschließen.

Die Inhaltsmenge der Pods bzw. Sachets ist vorzugsweise so bemessen, dass sie für eine einzige Anwendung ausreicht. Solche Darreichungsformen werden auch als "Unidose Pods" bzw. "Unidose Sachets" bezeichnet. Die vorliegende Erfindung löst die oben beschriebenen Aufgaben vollumfänglich: da die Pods oder Sachets jeweils definierte Mengen an Nahrungsmittel enthalten, ist die Dosierung problemlos; im einfachsten Fall reicht wie gesagt eine Dosis für eine Anwendung aus. Die Entnahme ist ebenfalls sehr einfach und führt vor allem nicht zur Kontaminierung der Restmenge. Die Darreichungsformen sind zudem stabil, d.h. sie können in einfachster umweltneutraler Verpackung, beispielsweise in Kartons aus Pappe, die leicht recyclebar sind, in den Handel gebracht werden,

### Nahrungsmittel

In einer bevorzugten Ausführungsform der vorliegenden Erfindung liegen die Nahrungsmittel als gegebenenfalls verdichtete wasserlösliche Pulver, beispielsweise als gepresste Tabletten vor. Insbesondere handelt es sich bei den Nahrungsmitteln um solche zur Ernährung von Säuglingen und Kleinkindern. Besonders bevorzugt sind Milchpulver einschließlich solcher Produkte für die Babyernährung, die mit weiteren Zusatzstoffen additiviert sind.

Eine typische, jedoch nur exemplarische Milchpulverzusammensetzung wird beispielsweise erhalten, indem man Rohmilch, Molkepulver, Magermilchpulver, Pflanzenöl, Molkeproteinkonzentratpulver, Galacto-Oligosaccharide, Fructo-Oligosaccharide, Vitamine sowie Mineralstoffe zu einer flüssigen Phase vermischt, und diese dann homogenisiert, sterilisiert, konzentriert und schließlich sprühtrocknet;

### Hüllen

In einer weiteren bevorzugten Ausführungsform besteht die Hülle aus einem wasserlöslichen Polymer, vorzugsweise einem solchen, das biologisch abbaubar und für die menschliche Ernährung zugelassen ist. Beispiele für geeignete Hüllmaterialien sind beispielsweise Stärken, einschließlich deren Abbauprodukten sowie chemisch oder physikalisch erzeugten Derivaten (insbesondere Dextrine und Maltodextrine), Gelatine, Gummi Arabicum, Agar-Agar, Ghatti Gum, Gellan Gum, modifizierte und nicht-modifizierte Cellulosen, Pullulan, Curdlan, Carrageenane, Alginsäure, Alginate, Pektin, Inulin, Xanthan Gum sowie Poolyvinylalkohol und Mischungen von zwei oder mehreren dieser Substanzen.

Ein bevorzugtes Verkapselungsmaterial ist eine Gelatine (insbesondere Schweine-, Rind-, Geflügel- und/oder Fischgelatine), wobei diese vorzugsweise einen Schwellfaktor von größer oder gleich 20, vorzugsweise von größer oder gleich 24 aufweist. Unter diesen Stoffen ist Gelatine besonders bevorzugt, da sie gut verfügbar ist und mit unterschiedlichen Schwellfaktoren bezogen werden kann.

Ebenfalls bevorzugt sind Maltodextrine (insbesondere auf Basis von Getreide, speziell Mais, Weizen, Tapioka oder Kartoffeln), die vorzugsweise DE-Werte im Bereich von 10 bis 20 aufweisen. Weiterhin bevorzugt sind Cellulosen (z.B. Celluloseether), Alginate (z.B. Natriumalginat), Carrageenan (z.B. beta-, jota-, lambda- und/oder kappa-Carrageenan), Gummi Arabicum, Curdlan und/oder Agar Agar.

Ebenfalls geeignet sind Alginatkapseln wie sie beispielsweise in den folgenden Schriften ausführlich beschrieben werden: EP 0389700 A1**,** US 4,251,195**,** US 6,214,376**,** WO 2003 055587 oder WO 2004 050069 A1.

In einer weiteren Ausführungsform besteht die Hülle der Kapseln aus Koazervationsprodukten aus kationischen Monomeren oder Biopolymeren (wie z.B. Chitosan) und anionischen Monomeren, wie beispielsweise Alginaten.

Das meist bevorzugte Hüllmaterial stellt jedoch ein wasserlösliches Polymer dar, welches zu mindestens 75 Gew.-% und insbesondere zu etwa 90 bis etwa 100 Gew.-% aus Polyvinylalkohol besteht.

### Herstellverfahren

Bei den erfindungsgemäßen Darreichungsformen handelt es sich im Allgemeinen um mit filmbildenden Polymeren umhüllte feindisperse flüssige oder feste Phasen, bei deren Herstellung sich die Polymere nach Emulgierung und Koazervation oder Grenzflächenpolymerisation auf dem einzuhüllenden Material niederschlagen. Nach einem anderen Verfahren werden geschmolzene Wachse in einer Matrix aufgenommen ("microsponge"), die als Mikropartikel zusätzlich mit filmbildenden Polymeren umhüllt sein können. Nach einem dritten Verfahren werden Partikel abwechselnd mit Polyelektrolyten unterschiedlicher Ladung beschichtet ("layer-by-layer"-Verfahren). Die mikroskopisch kleinen Kapseln lassen sich wie Pulver trocknen. Neben einkernigen Mikrokapseln sind auch mehrkernige Aggregate, auch Mikrosphären genannt, bekannt, die zwei oder mehr Kerne im kontinuierlichen Hüllmaterial verteilt enthalten. Ein- oder mehrkernige Mikrokapseln können zudem von einer zusätzlichen zweiten, dritten etc. Hülle umschlossen sein. Die Hülle kann aus natürlichen, halbsynthetischen oder synthetischen Materialien bestehen. Natürlich Hüllmaterialien sind beispielsweise Gummi Arabicum, Agar-Agar, Agarose, Maltodextrine, Alginsäure bzw. ihre Salze, z.B. Natrium- oder Calciumalginat, Fette und Fettsäuren, Cetylalkohol, Collagen, Chitosan, Lecithine, Gelatine, Albumin, Schellack, Polysaccharide, wie Stärke oder Dextran, Polypeptide, Proteinhydrolysate, und Sucrose. Halbsynthetische Hüllmaterialien sind unter anderem chemisch modifizierte Cellulosen, insbesondere Celluloseester und -ether, z.B. Celluloseacetat, Ethylcellulose, Hydroxypropylcellulose, Hydroxypropylmethylcellulose und Carboxymethylcellulose, sowie Stärkederivate, insbesondere Stärkeether und -ester. Synthetische Hüllmaterialien sind beispielsweise Polymere wie Polyacrylate, Polyamide, Polyvinylalkohol oder Polyvinylpyrrolidon soweit diese für die Ernährung zugelassen sind.

Beispiele für Pods des Stands der Technik sind folgende Handelsprodukte (in Klammern angegeben ist jeweils das Hüllmaterial) : *Hallcrest Microcapsules* (Gelatine, Gummi Arabicum), *Coletica Thalaspheres* (maritimes Collagen), *Lipotec Millicapseln* (Alginsäure, Agar-Agar), *Induchem Unispheres* (Lactose, mikrokristalline Cellulose, Hydroxypropylmethylcellulose); *Unicerin C30* (Lactose, mikrokristalline Cellulose, Hydroxypropylmethylcellulose), *Kobo Glycospheres* (modifizierte Stärke, Fettsäureester, Phospholipide), *Softspheres* (modifiziertes Agar-Agar) und *Kuhs Probiol Nanospheres* (Phospholipide) sowie *Primaspheres* und *Primasponges* (Chitosan, Alginate) und *Primasys* (Phospholipide).

Chitosan-Pods und Verfahren zu ihrer Herstellung sind aus dem Stand der Technik hinlänglich bekannt **[**WO 01/01926**,** WO 01/01927**,** WO 01/01928**,** WO 01/01929**].** Mikrokapseln mit mittleren Durchmessern im Bereich von 0,0001 bis 5, vorzugsweise 0,001 bis 0,5 und insbesondere 0,005 bis 0,1 mm, bestehend aus einer Hüllmembran und einer die Wirkstoffe enthaltenden Matrix, können beispielsweise erhalten werden, indem man
(a) aus Gelbildnern, kationischen Polymeren und Wirkstoffen eine Matrix zubereitet,
(b) gegebenenfalls die Matrix in einer Ölphase dispergiert,
(c) die dispergierte Matrix mit wässrigen Lösungen anionischer Polymere behandelt und gegebenenfalls dabei die Ölphase entfernt.

Die Schritte (a) und (c) sind dabei insofern austauschbar, als man anstelle der kationischen Polymeren in Schritt (a) anionische Polymere einsetzt und umgekehrt.

Man kann die Pods auch erzeugen, indem man den Wirkstoff abwechselnd mit Schichten aus unterschiedlich geladenen Polyelektrolyten einhüllt (layer-by-layer-Technologie). In diesem Zusammenhang sei auf das Europäische Patent EP 1064088 B1 (Max-Planck Gesellschaft) verwiesen.

Besonders bevorzugt und ein weiterer Gegenstand der Erfindung ist ein Verfahren zur Herstellung einer Darreichungsform wie oben angegeben, umfassend oder bestehend aus den folgenden Schritten:
(a) Bereitstellen eines ersten und eines zweiten wasserlöslichen Polymerfilms;
(b) Bereitstellen eines wasserlöslichen Nahrungsmittels,
(c) Formen einer offenen Mulde aus einer ersten wasserlöslichen Folie;
(d) Füllen mindestens eines Teils der Mulde mit dem Nahrungsmittel aus Schritt (b);
(e) Abdecken der gefüllten Mulde mit einer zweiten wasserlöslichen Folie; und
(f) wasserdichtes Verschließen der ersten wasserlöslichen Folie der gefüllten Mulde mit der zweiten wasserlöslichen Folie, um die Darreichungsform zu erhalten.

Das Verfahren ist deshalb bevorzugt, da sich auf diese Weise auch besonders große Pods, also Sachets, herstellen lassen, was mit den oben beschriebenen Verfahren nur eingeschränkt möglich ist.

Auf dem Markt sind Maschinen zur Herstellung der erfindungsgemäßen "Unidose Pods" bzw. "Unidose-Sachets", z. B. für die Waschmittelindustrie, bekannt, z. B. von der Firma Foshan Polyva. Anleitungen zur Bedienung von Maschinen dieser Art findet man unter https://www.polyva-pvafilm.com/polyva-sample-making-for-laundry-pods-7258.html

Der wasserlösliche Polymerfilm sollte dabei vorzugsweise zu mindestens 75 Gew.-% und insbesondere etwa 90 bis etwa 100 Gew.-% aus Polyvinylalkohol bestehen, dessen Stärke insbesondere etwa 10 bis 50 µm und insbesondere etwa 15 bis etwa 25 µm beträgt, wie sie im Handel erhältlich sind.

Die Größe der Mulde richtet sich dabei nach der Menge, die abgepackt werden soll. Vorzugsweise ist die Mulde so ausgelegt, dass gemäß Verfahrensschritt (d) 1 bis 20 g und insbesondere 5 bis 15 g des Nahrungsmittels eingefüllt werden können.

Eine detaillierte Beschreibung der Herstellung entsprechender Darreichungsformen findet sich auch im experimentellen Teil. Die so erhaltenen Pods bzw. Sachets weisen eine hohe Löslichkeit auf, und zwar eine vollständige Auflösung bei 20 °C in Wasser von 16 dH bei einem Gewichtsverhältnis zwischen Pod bzw. Sachet und Wasser von etwa 1:5 bis etwa 1:2 und vorzugsweise von etwa 1:4 bis 2:3.

### GEWERBLICHE ANWENDBARKEIT

Ein letzter Gegenstand der Erfindung betrifft eine Kartonage, enthaltend eine Vielzahl von Nahrungsmittelzubereitungen in einer Darreichungsform wie oben beschrieben, in der die Produkte in den Handel gebracht werden können.

### Beispiel 1

### Allgemeines Verfahren zur Herstellung von Unidose-Milchpulver-Pods

Ein zugeschnittener Streifen PVA-Folie mit einer Dicke von 20 µm wurde in die Mulde einer Presse des Typs Polyva SPL-01 eingelegt und auf eine Temperatur von 110 bis 130 °C erhitzt, wodurch er plastifiziert wurde. Die Folie wurde dann durch Herunterdrücken des Stempels der Presse an die Form der Mulde angepasst. Anschließend wurde die Mulde mit 8 g Milchpulver befüllt und mit einem zweiten Streifen leicht angefeuchteter PVA-Folie bedeckt. Schließlich wurden die beiden Folien durch ein zweites Absenken des Stempels der Presse mit Wasser versiegelt, und der Pod erhalten.

### Beispiel 2

### Allgemeines Verfahren zur Herstellung von Unidose-Milchpulvertabletten-Pods

Ein zugeschnittener Streifen PVA-Folie mit einer Dicke von 20 µm wurde in die Mulde einer Presse des Typs Polyva SPL-01 eingelegt und auf eine Temperatur von 110 bis 130 °C erhitzt, wodurch er plastifiziert wurde. Die Folie wurde dann durch Herunterdrücken des Stempels der Presse an die Form der Mulde angepasst. Anschließend wurde die Mulde mit einer 8 Milchpulvertablette befüllt und mit einem zweiten Streifen leicht angefeuchteter PVA-Folie bedeckt. Schließlich wurden die beiden Folien durch ein zweites Absenken des Stempels der Presse mit Wasser versiegelt, und der Pod erhalten.

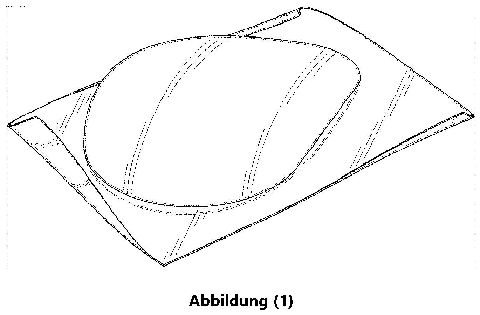

**Abbildung 1** gibt die Zeichnung eines Unidose-Milchpulver-Pods wieder.

## Patentansprüche

1. Nahrungsmittelzubereitung in wasserlöslicher Darreichungsform, erhältlich oder erhalten durch die folgenden Schritte:
(a) Bereitstellen eines wasserlöslichen Nahrungsmittels und
(b) Einschließen des Nahrungsmittels aus Schritt (a) in einer wasserlöslichen Hülle.

2. Zubereitung nach Anspruch 1, **dadurch gekennzeichnet, dass** es sich um einen wasserlöslichen Pod bzw. ein wasserlösliches Sachet handelt.

3. Zubereitung nach den Ansprüchen 1 und/oder 2, **dadurch gekennzeichnet, dass** das Nahrungsmittel fest, flüssig oder halbflüssig vorliegt.

4. Zubereitung nach mindestens einem der Ansprüche 1 bis 3, **dadurch gekennzeichnet, dass** das Nahrungsmittel als gegebenenfalls verdichtetes wasserlösliches Pulver vorliegt.

5. Zubereitung nach mindestens einem der Ansprüche 1 bis 4, **dadurch gekennzeichnet, dass** das Nahrungsmittel als gepresste Tablette vorliegt.

6. Zubereitung nach mindestens einem der Ansprüche 1 bis 5, **dadurch gekennzeichnet, dass** das Nahrungsmittel zur Ernährung von Säuglingen oder Kleinkindern dient.

7. Zubereitung nach mindestens einem der Ansprüche 1 bis 6, **dadurch gekennzeichnet, dass** das Nahrungsmittel ein Milchpulver darstellt.

8. Zubereitung nach mindestens einem der Ansprüche 1 bis 7, **dadurch gekennzeichnet, dass** die Hülle aus einem wasserlöslichen Polymer besteht.

9. Zubereitung nach mindestens einem der Ansprüche 1 bis 8, **dadurch gekennzeichnet, dass** die Hülle aus einem wasserlöslichen Polymer besteht, das biologisch abbaubar und für die menschliche Ernährung zugelassen ist.

10. Zubereitung nach mindestens einem der Ansprüche 1 bis 9, **dadurch gekennzeichnet, dass** das Material der Hülle ausgewählt ist aus der Gruppe, die gebildet wird von Stärken, einschließlich deren Abbauprodukten sowie chemisch oder physikalisch erzeugten Derivaten, Gelatine, Gummi Arabicum, Agar-Agar, Ghatti Gum, Gellan Gum, modifizierte und nicht-modifizierte Cellulosen, Pullulan, Curdlan, Carrageenane, Alginsäure, Alginate, Pektin, Inulin, Xanthan Gum sowie Polyvinylalkohol und deren Mischungen

11. Zubereitung nach mindestens einem der Ansprüche 1 bis 9, **dadurch gekennzeichnet, dass** die Hülle zu mindestens 75 Gew.-% aus Polyvinylalkohol besteht.

12. Verfahren zur Herstellung einer Darreichungsform nach Anspruch 1, umfassend oder bestehend aus den folgenden Schritten:
(a) Bereitstellen eines ersten und eines zweiten wasserlöslichen Polymerfilms;
(b) Bereitstellen eines wasserlöslichen Nahrungsmittels,
(c) Formen einer offenen Mulde aus einer ersten wasserlöslichen Folie;
(d) Füllen mindestens eines Teils der Mulde mit dem Nahrungsmittel aus Schritt (b);
(e) Abdecken der gefüllten Mulde mit einer zweiten wasserlöslichen Folie; und
(f) wasserdichtes Verschließen der ersten wasserlöslichen Folie der gefüllten Mulde mit der zweiten wasserlöslichen Folie, um die Darreichungsform zu erhalten.

13. Verfahren nach Anspruch 12, **dadurch gekennzeichnet, dass** der wasserlösliche Polymerfilm zu mindestens 75 Gew.-% aus Polyvinylalkohol, vorzugsweise einer Stärke von 10 bis 50 µm besteht.

14. Verfahren nach mindestens einem der Ansprüche 12 bis 13, **dadurch gekennzeichnet, dass** die Mulde gemäß Verfahrensschritt (d) mit 1 bis 20 g des Nahrungsmittels gefüllt wird.

15. Kartonage, enthaltend eine Vielzahl von Nahrungsmittelzubereitungen in einer Darreichungsform gemäß mindestens einem der Ansprüche 1 bis 11.
